(19) Europäisches Patentamt
European Patent Office
Office européen des brevets

(11) EP 3 847 645 B1

(12) EUROPEAN PATENT SPECIFICATION

(45) Date of publication and mention of the grant of the patent:
**13.04.2022 Bulletin 2022/15**

(21) Application number: **18778468.1**

(22) Date of filing: **25.09.2018**

(51) International Patent Classification (IPC):
***G10L 21/0208*** *(2013.01)* ***G10L 21/0272*** *(2013.01)*
***G01H 7/00*** *(2006.01)* ***G10L 21/0216*** *(2013.01)*
***G10L 21/038*** *(2013.01)* ***H04R 3/00*** *(2006.01)*
*G10K 15/08* *(2006.01)*

(52) Cooperative Patent Classification (CPC):
**G10L 21/0208; G01H 7/00; H04R 3/005;**
G10K 15/08; G10L 21/0272; G10L 21/038;
G10L 2021/02082; G10L 2021/02087;
G10L 2021/02166; H04R 2430/23

(86) International application number:
**PCT/EP2018/075994**

(87) International publication number:
**WO 2020/064089 (02.04.2020 Gazette 2020/14)**

(54) **DETERMINING A ROOM RESPONSE OF A DESIRED SOURCE IN A REVERBERANT ENVIRONMENT**

BESTIMMUNG EINER RAUMIMPULSANTWORT FÜR EINE HALLIGE UMGEBUNG

DÉTERMINATION D'UNE RÉPONSE IMPULSIONELLE D'UNE PIÈCE DANS UN ENVIRONNEMENT RÉVERBÉRANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.07.2021 Bulletin 2021/28**

(73) Proprietor: **HUAWEI TECHNOLOGIES CO., LTD.**
**Shenzhen, Guangdong 518129 (CN)**

(72) Inventors:
- **SHERSON, Thomas**
  **2600 Delft (NL)**
- **KLEIJN, Willem Bastiaan**
  **2600 Delft (NL)**
- **SETIAWAN, Panji**
  **80992 Munich (DE)**
- **JIN, Wenyu**
  **80992 Munich (DE)**

(74) Representative: **Grünecker Patent- und Rechtsanwälte PartG mbB**
**Leopoldstraße 4**
**80802 München (DE)**

(56) References cited:
**EP-A1- 2 642 768**

- **STEFANAKIS NIKOLAOS ET AL: "Acoustic Beamforming in Front of a Reflective Plane", 2018 26TH EUROPEAN SIGNAL PROCESSING CONFERENCE (EUSIPCO), EURASIP, 3 September 2018 (2018-09-03), pages 26-30, XP033461538, DOI: 10.23919/EUSIPCO.2018.8553103 [retrieved on 2018-11-29]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present disclosure relates to a method and an apparatus for determining the room response of a particular source of an audio signal in a reverberant environment from an observed signal received by a plurality of microphones.

## BACKGROUND

In the field of acoustic processing, a major challenge is how to separate a particular source signal from interference, for example to perform speech recognition or to rearrange an acoustic scene. A natural approach to address this challenge is to combine the signals recorded by a plurality of microphones to favor particular source locations over others. Generally, such a combination is linear and time-invariant. The advantage of such a multi-channel processing over single-channel processing is that it can enhance the signal-to-interference ratio without imposing distortion on the source signal.

To find the best linear combination, various paradigms have been used in the art. These include conventional beamforming that assumes knowledge of the desired source location and blind source separation that is based on the assumption of source independence. Blind source separation aims at separating all of the involved sources, regardless of their attribution to the desired or interfering sources. An overview of known blind source separation algorithms is presented in the article "Performance Measurement in Blind Audio Source Separation" by E. Vincent, R. Gribonval and C. Fevotte in IEEE Transactions on Audio, Speech, and Language Processing, vol. 14, no. 4, 1462-1469, 2006.

Blind source separation basically determines the relative room response of the individual sources, i.e. the room response with an arbitrary filtering. The potential gain in the signal-to-interference ratio for blind source separation is higher than conventional beamforming as it can exploit the full spatial signatures of the desired source within a room. In contrast, in conventional beamforming only the direct-path signal component is used to improve the signal-to-interference ratio. The beamforming family of algorithms concentrate on enhancing the sum of the desired sources while treating all other signals as interfering sources. Typical examples for beamforming algorithms are the delay-and-sum beamformer and the filter-and-sum beamformer.

An approach that lies between conventional beamforming and blind source separation is based on so-called generalized beamforming that is beamforming based on the relative room response rather than a physical direction. The notion of beamforming implies that the finding of the response is not blind, and the solution, hence, is not based on the assumption of independence.

In the past, generalized beamforming has been based on, for example, the knowledge of certain time segments where only the target source is active. Such time segments can then be used to determine the room response. An example of such an approach is described in the article "Multichannel Eigenspace Beamforming in a Reverberant Noisy Environment With Multiple Interfering Speech Signals" by S. Markovich, S. Gannot, and I. Cohen in IEEE Transactions on Audio, Speech, and Language Processing, vol. 17, no. 6, 1071-1083, 2009.

In practical situations, it has proven difficult, however, to estimate the generalized beamformer. Furthermore, classic beamforming approaches generally rely on strong assumptions, for instance with respect to the location and the distance of the target source. In addition, it is desirable to further increase the signal-to-interference ratio, in particular for applications including teleconferencing, augmented reality, in-vehicle communication systems, and smartphones/tablets with two or more microphones. It is known according to the patent application EP2642768A1, a technique for estimating a direct sound steering vector.

It is further known according to the publication S.NiKOLAOS ET AL "Acoustic Beamforming in Front of a Reflective Plane", 26TH EUROPEAN SIGNAL PROCESSING CONFERENCE, EUSIPCO 2018, 3 September 2018, pages 26-30, a reflection-propagation model for determining a reflection-aware steering vector.

## SUMMARY OF INVENTION

The present disclosure provides a method and an apparatus for generalized beamforming with a gain in the signal-to-interference ratio that is higher than that of a conventional direct-path beamformer, with no additional information over that provided to a conventional direct-path beamformer. The method is particularly effective in removing defuse noise and the sensor self-noise from the estimate of the target signal. The method described below can be interpreted as a form of informed blind source separation.

According to one aspect of the present disclosure, an apparatus for determining a room response of a desired source in a reverberant environment from an observed signal received by a plurality of microphones is provided wherein the apparatus comprises a processing circuitry configured to: determine a direct-path steering vector for the plurality of microphones based on a known direction and/or location of the desired source; determine a reverberant-path steering vector for the plurality of microphones that maximizes a cross moment of a direct-path response to the observed signal and a reverberant-path response to the observed signal; and determine the room response based on a combination of the direct-path steering vector and the reverberant-path steering vector.

The processing circuitry may include a dedicated direct-path beamforming unit configured to determine the direct-path steering vector for the plurality of microphones based on the known direction and/or location of the desired source. The processing circuitry may further include a dedicated reverberant-path beamforming unit configured to determine the reverberant-path steering vector for the plurality of microphones that maximizes the cross moment of the direct-path response to the observed signal and the reverberant-path response to the observed signal. Furthermore, the processing circuitry may include a dedicated combiner configured to determine the room response based on the combination of the direct-path steering vector and the reverberant-path steering vector.

According to a further aspect, the processing circuitry may be further configured to apply a relative scaling to the direct-path steering vector and the reverberant-path steering vector before combining the direct-path steering vector and the reverberant-path steering vector. The processing circuitry may include a dedicated scaling unit configured to apply the relative scaling to the direct-path steering vector and the reverberant-path steering vector before passing the direct-path steering vector and the reverberant-path steering vector to the combiner.

The scaling factor for the relative scaling may be based on a ratio of standard deviations of the reverberant-path response to the observed signal and the direct-path response to the observed signal.

According to a further aspect, the processing circuitry may be further configured to maximize a second order central cross moment of the direct-path response to the observed signal and the reverberant-path response to the observed signal. It may in particular be the reverberant-path beamforming unit that is configured to maximize the second central cross moment of the direct-path response to the observed signal and the reverberant-path response to the observed signal.

According to a further aspect, the processing circuitry may be further configured to determine the reverberant-path steering vector such that the reverberant-path steering vector is orthogonal to the direct-path steering vector. It may in particular be the reverberant-path beamforming unit that is further configured to determine the reverberant-path steering vector such that the reverberant-path steering vector is orthogonal to the direct-path steering vector.

According to a further aspect, the processing circuitry may be further configured to determine the direction and/or the location of the desired source with respect to the plurality of microphones based on source detection performed on images of the room recorded by a camera. The room may in particular correspond to the reverberant environment. The apparatus may in particular comprise an image processing unit configured to determine the direction and/or the location of the desired source with respect to the plurality of microphones based on source detection performed on images of the room recorded by a camera. The image processing unit may be provided as part of the processing circuitry or separately.

According to a further aspect, the processing circuitry may be further configured to determine the direction and/or a location of the desired source with respect to the plurality of microphones based on direct beamforming using the plurality of microphones. In particular, a dedicated delay-sum beamforming unit may be provided that is configured to determine the direction and/or the location of the desired source with respect to the plurality of microphones based on direct beamforming using the plurality of microphones.

According to a further aspect, the processing circuitry may be further configured to: determine the direct-path response to the observed signal using the direct-path steering vector; determine the reverberant-path response to the observed signal using the reverberant-path steering vector; and separate a source signal of the desired source based on a combination of the direct-path response and the reverberant-path response. A dedicated direct-path signal estimator may be provided that is configured to determine the direct-path response to the observed signal using the direct-path steering vector. Furthermore, a dedicated reverberant-path signal estimator may be provided that is configured to determine the reverberant-path response to the observed signal using the reverberant-path steering vector. In addition, a signal combiner may be provided that is configured to separate the source signal of the desired source based on the combination of the direct-path response and the reverberant-path response.

The processing circuitry may in particular, be further configured to maximize an SINR of the source signal over a plurality of time intervals of the observed signal. A dedicated signal-to-interference-plus-noise ratio (SINR) unit may be provided to that is configured to maximize the SINR of the source signal over the plurality of time intervals of the observed signal.

According to a further aspect, the processing circuitry may be further configured to transform the observed signal from a time domain into a frequency domain and to determine the room response for each frequency bin of the transformed observed signal. A Discrete Fourier transform (DFT) unit may be provided that is configured to transform the observed signal from the time domain into the frequency domain.

The apparatus may further comprise the plurality of microphones configured to capture a multi-channel sound signal, wherein the processing circuitry is further configured to perform temporal sampling on the multi-channel sound signal to generate the observed signal. A dedicated sampling unit may be provided that is configured to perform temporal sampling on the multi-channel sound signal to generate the observed signal.

The apparatus may further comprise a camera configured and arranged to record images of a room corresponding to the room response. More than one camera may be provided to record images of the entire reverberant environment.

According to another aspect of the present disclosure, a method for determining a room response of a desired source in a reverberant environment from an observed signal received by a plurality of microphones is provided wherein the method comprises: determining a direct-path steering vector for the plurality of microphones based on a known direction and/or location of the desired source; determining a reverberant-path steering vector for the plurality of microphones that maximizes a cross moment of a direct-path response to the observed signal and a reverberant-path response to the observed signal; and determining the room response based on a combination of the direct-path steering vector and the reverberant-path steering vector.

According to a further aspect, the room response may be determined based on the combination of the direct-path steering vector and the reverberant-path steering vector after relative scaling of the direct-path steering vector and the reverberant-path steering vector.

The relative scaling factor may be based on a ratio of standard deviations of the direct-path response to the observed signal and the reverberant-path response to the observed signal.

The cross moment may be a second order central cross moment of the direct-path response to the observed signal and the reverberant-path response to the observed signal.

According to a further aspect, the reverberant-path steering vector may be orthogonal to the direct-path steering vector.

According to a further aspect, the method may further comprise determining the direction and/or the location of the desired source with respect to the plurality of microphones based on source detection using image processing of images of the room recorded by a camera. Images recorded by more than one camera may be processed to detect the source.

The method may further comprise determining the direction and/or the location of the desired source with respect to the plurality of microphones based on direct beamforming using the plurality of microphones.

According to a further aspect, the room response may be determined for each frequency bin of a time-frequency transform of the observed signal.

The method may further comprise separating a source signal of the desired source using the determined room response.

The method may in particular comprise maximizing a signal-to-interference-plus-noise ratio (SINR) of the separated source signal over a plurality of time intervals of the observed signal.

Furthermore, a computer-readable medium storing instructions that when executed on a processor cause the processor to perform any one of the above described methods is provided.

Any one of the direct-path beamforming unit, the reverberant-path beamforming unit, the combiner, the scaling unit, the image processing unit, the delay-sum beamforming unit, the direct-path signal estimator, the reverberant-path signal estimator, the signal combiner, the signal-to-interference-plus-noise ratio (SINR) unit, the Discrete Fourier transform (DFT) unit, and the sampling unit may be implemented as a software module or as a separate unit of the processing circuitry. The units may be implemented as a combination of software and hardware. The described processing may be performed by a chip, such as a general-purpose processor, a CPU, a GPU, a digital signal processor (DSP), or a field programmable gate array (FPGA), or the like. However, the present disclosure is not limited to implementation of the above-mentioned units on programmable hardware. One or more of the units may also be implemented on an application-specific integrated circuit (ASIC) or by a combination of the above-mentioned hardware components.

## BRIEF DESCRIPTION OF DRAWINGS

In the following, exemplary embodiments are described in more detail with reference to the attached figures and drawings, in which:

Figure 1 shows a desired source and interfering sources in a reverberant environment to demonstrate the underlying problem solved by the present disclosure.

Figure 2 schematically shows details of a generalized beamformer according to a first embodiment of the present disclosure.

Figure 3 schematically show details of a generalized beamformer according to a second embodiment of the present disclosure.

## DETAILED DESCRIPTION

The present disclosure relates to the general technical field of acoustic processing. It offers a way to separate a desired source from interfering sources and noise in a reverberant environment. The reverberant-path room response for the desired source is included to achieve a higher signal-to-interference-plus-noise ratio as compared to conventional direct-path beamformers.

A reverberant environment may be a closed room, such as the cabin of a vehicle or a room in a building, but may also be given by an open space wherein at least some objects that reflect an acoustic signal emitted by the desired source are present. Consequently, the methods and apparatuses of the present disclosure described below can be advantageously applied in a number of different scenarios. Typical applications include teleconferencing, augmented reality, in-vehicle communication systems, smartphones or tablets with two or more microphones, and the like.

The described methods and apparatuses may be used to better isolate a speech signal from a noisy and interfering environment wherein the speaker may be moving. The improved SINR of the isolated speech signal also helps to reduce errors in speech recognition processing and thus contributes to the comfort and safety of operating speech-operated devices, such as navigation systems, home theaters, and voice command devices that operate as front ends for web services, such as streaming audio, music, books, video and other digital content.

The room transfer function (RTF) or acoustic transfer function (ATF) demonstrates the collective effect of multipath propagation of sound between a source, such as a speaker, and a receiver, such as an array of microphones, within a given acoustical room. Accurate modeling of the ATF is useful in sound field simulators as well as many other applications such as sound reproduction, sound field equalization, echo cancellation, and speech dereverberation.

When the spatial information is neglected, i.e. when both source and receivers are point and omnidirectional, the whole information about the ATF is contained in the impulse response of the corresponding acoustic room, in short room impulse response (RIR), under the common hypothesis that the acoustics of a room is a linear, time-invariant system. Under the assumption that the ATF behaves as a linear time-invariant system, a finite impulse response (FIR) filter may be used to model the ATF.

A typical approach for determining an ATF of an acoustic room is to measure the room response of a known signal with one or more microphones. The ATF is, however, extremely sensitive to the locations of the source of the signal and the one or more receivers, i.e. microphones. This is a direct result of the acoustic room being a reverberant environment wherein reflections of the emitted signal off walls or objects contribute to the room response. The acoustics of a reverberant environment includes both time-domain effects, such as echoes, discrete reflections, and statistical reverberant tail, and frequency-domain effects, such as frequency response and frequency-dependent reverberation.

The present disclosure deals with the problem of estimating an acoustic transfer function (ATF) with respect to a particular (desired) source in a reverberant environment, such as a closed room, for instance in a home, a vehicle's cabin, or any acoustic room with at least one object contributing to the reflection of sound.

The basic scenario is schematically shown in Figure 1 wherein the box schematically shows the delimitation of the acoustic room. A single desired source 110 is shown inside the acoustic room, emitting the acoustic source signal $s_1^d$. In addition, at least one stationary interfering source 112 emitting the source signal $s_1^s$ and at least one nonstationary interfering source 114 emitting the source signal $s_1^{ns}$ are present inside the acoustic room. The following description assumes that only the source signal of a single desired source shall be isolated while all other source signals are treated as noise. The present disclosure is, however, not limited to a single desired source but can easily be extended to isolate a plurality of desired source signals.

As schematically shown in Figure 1, acoustic waves emitted by the desired source 110 can reach the microphone array 100 along a direct path as well as along a reverberant path. Generally, a room impulse response obtained from a sound source in a specific position of a real environment can be divided into three parts: direct sound, early reflections, and late reflections. Without restriction, early and late reflections are combined in the following as a reverberant-path contribution to the observed signal $\boldsymbol{y} = [y_1\ y_2\ y_3]^T$ wherein $^T$ indicates the transpose. According to the illustrative, nonlimiting example of Figure 1, an array of three microphones 100 is used to measure the room response as the observed signal $\boldsymbol{y}$. Each microphone signal is subject to inherent sensor noise such that the entire microphone array 100 adds sensor noise $\boldsymbol{v} = [v_1\ v_2\ v_3]^T$ to the observed signal.

The microphones may be any microphone known in the art, either omnidirectional or unidirectional. The plurality of microphones may be implemented as a microphone array, in particular, as a linear, a circular, or a spherical or hemispherical microphone array. The microphones may be distributed, in particular equidistantly, along a line, over a circle or across a surface to implement the plurality of microphones. Without restriction, the plurality of microphones is referred to in the present disclosure as a microphone array.

Each microphone is configured to capture an audio signal or microphone signal, wherein the microphone signal may be captured as an envelope signal or a digital signal. In the case of an envelope or analog signal, the audio signal or microphone signal may further be converted into a digital signal using an A/D converter. In the case of a plurality of microphones, the observed microphone signal is a multi-channel signal. For simplicity, the terms "audio signal" and "observed signal" are used in the following as general terms for digital signals captured by the plurality of microphones and processed by the processing circuitry, for instance by a processor unit of the processing circuitry. The processing will be described in detail below with respect to Figures 2 and 3.

Using the matrix of filters formalism, the observed signal y can be expressed with respect to the source signal s of the desired source by means of the acoustic transfer function $\boldsymbol{A}$ according to Equation (1):

$$\boldsymbol{y} = \boldsymbol{A} * \boldsymbol{s} + \boldsymbol{n} \qquad (1)$$

wherein * denotes convolution, $\boldsymbol{n}$ summarizes sensor noise and all interfering sources as noise, and the observed signal is represented as a discrete (digital) signal over a time frame or window, for instance as $\boldsymbol{y} = [y(0)...y(T-1)]^T$.

Equation (1) can be transformed from the time domain into the frequency domain, for instance using a fast Fourier transform (FFT), a Discrete Fourier transform (DFT) or the like. In the frequency domain, Equation (1) simply reads:

$$\boldsymbol{y} = \boldsymbol{A}\boldsymbol{s} + \boldsymbol{n} \qquad (2)$$

wherein for the sake of simplicity, the same symbols are used for the transformed quantities.

As shown in Figure 1, the observed signal $\boldsymbol{y}$ can generally be decomposed into contributions from the interfering sources, the desired sources and the sensor noise as in Equation (3):

$$\boldsymbol{y} = \boldsymbol{H}^d\boldsymbol{s}^d + \boldsymbol{H}^s\boldsymbol{s}^s + \boldsymbol{H}^{ns}\boldsymbol{s}^{ns} + \boldsymbol{v} \qquad (3)$$

wherein $\boldsymbol{H}^d\boldsymbol{s}^d$ , $\boldsymbol{H}^s\boldsymbol{s}^s$ , and $\boldsymbol{H}^{ns}\boldsymbol{s}^{ns}$ are the (relative) complete room responses of the different sources. By combining $\boldsymbol{H}^s\boldsymbol{s}^s$ , $\boldsymbol{H}^{ns}\boldsymbol{s}^{ns}$ , and $\boldsymbol{v}$ as the noise $\boldsymbol{n}$ , Equation (3) turns into Equation (2) wherein the acoustic transfer function $\boldsymbol{A}$ is given by the transfer function $\boldsymbol{H}^d$ for the desired source.

In a reverberant environment, the transfer function $\boldsymbol{H}^d$ can be decomposed into a direct-path contribution and a reverberant-path contribution as in Equation (4):

$$\boldsymbol{H}^d = \boldsymbol{H}^d_{direct} + \boldsymbol{H}^d_{reverberant} \qquad (4)$$

The fundamental problem underlying the present disclosure is to determine a time-invariant linear demixing system $\boldsymbol{W} = \boldsymbol{A}^{-1}$ for the mixing system , i.e. the acoustic transfer function with regard to the desired source 110 and the microphone array 100. The linear demixing system can then be used to isolate the (desired) response to the observed signal $x^d$ from the entire observed signal.

As indicated above, the desired response to the observed signal can be decomposed into a direct-path component and a reverberant-path component as shown in Equation (5):

$$\boldsymbol{x}^d = \boldsymbol{x}^d_{direct} + \boldsymbol{x}^d_{reverberant} \qquad (5)$$

The present disclosure uses a modified generalized beamformer 150 to estimate the desired response to the observed signal $\hat{\boldsymbol{x}}^d$ 190 using weighting vectors $\boldsymbol{W}^d$ that are applied to the entire observed signal according to Equation (6):

$$\hat{\boldsymbol{x}}^d = \boldsymbol{W}^d\boldsymbol{y} \qquad (6)$$

wherein the weighting vectors are also decomposed into a direct-path component and a reverberant-path component according to Equation (7):

$$\boldsymbol{W}^d = \boldsymbol{W}^d_{direct} + \boldsymbol{W}^d_{reverberant} \qquad (7)$$

The desired response to the observed signal 190 may in particular be determined for a particular frame number *m* and frequency bin index *k*.

For simplicity, in the following, the superscript *d* for indicating the desired source-related quantities will be omitted and the direct-path and the reverberant-path components of the acoustic transfer function will simply be denoted as $\boldsymbol{a}_d$ and $\boldsymbol{a}_r$, respectively. Equation (2) can then be written as Equation (8):

$$\boldsymbol{y} = (\boldsymbol{a}_d + \boldsymbol{a}_r)\boldsymbol{x} + \boldsymbol{n} \quad (8)$$

The below described approach for finding the room response and the corresponding ATF is based on the assumption that the direction or the fully-specified spatial location of the desired source, i.e. the target source, is known. This is a reasonable assumption in many practical situations as will be described below with respect to Figures 2 and 3.

From the knowledge of the direction or full location of the target source, the direct-path relative transfer function $\boldsymbol{a}_d$ can be computed. For a known source location, the free-space Green's function can be used as for instance described in H. Kuttruff, Room acoustics, CRC Press, 2009. If only the direction toward the target source is known, a plane-wave (far field) response function may be used.

In the frequency domain, the direct-path relative transfer function $\boldsymbol{a}_d$ corresponds to a steering vector $\boldsymbol{w}_d$ for the direct path. Based on the knowledge of the steering vector for the direct path, a first estimate of the desired signal, i.e. the desired response to the observed signal, may be calculated. The method and apparatus described in the present disclosure improve this first estimate by adding a reverberant-path component.

A first embodiment of a generalized beamformer according to the present disclosure is shown in a schematic way in Figure 2. A direct-path beamforming unit 130 is provided to determine a direct-path steering vector $\boldsymbol{w}_d$ and a reverberant-path beamforming unit 140 is provided to determine a reverberant-path steering vector $\boldsymbol{w}_r$. Based on a combination of the direct-path steering vector and the reverberant-path steering vector, the room response of the desired source $\boldsymbol{W}^d$ is determined.

The present disclosure directly recovers the unknown reverberant portion of the acoustic transfer function based purely on prior knowledge of the direct part of the ATF. As discussed above, the direct-path component of the acoustic transfer function can be derived from knowledge of the direction and/or the location of the desired source with respect to the plurality of microphones. The direction can be expressed as a direction-of-arrival (DOA) expressing the direction from the plurality of microphones toward the desired source. The desired source may in particular be a speaker, i.e. a person, or an audio source such as a loudspeaker. The DOA may be expressed as a planar angle if the plurality of microphones and the desired source are arranged in one plane or may generally be expressed as a solid angle.

The method and apparatus according to the present disclosure requires only knowledge of the direction toward the desired source for the determination of the direct-path component of the acoustic transfer function. Thus, the assumptions imposed by the present disclosure are weaker than those of classic beamforming approaches that, in addition to the direction toward the desired source, also assume that the distance between the plurality of microphones and the desired source is known.

The direction toward the desired source, such as the DOA, can for instance, be derived through image processing of one or several images of the reverberant environment including the desired source using one or several cameras 120. The cameras 120 may record individual images or a video consisting of a sequence of image frames. Pattern and/or face recognition techniques known in the art may be used to identify a potential speaker, i.e. a person, and/or an audio source such as a loudspeaker in the recorded images. Based on a sequence of images, it may further be determined whether the detected person is actually speaking. Based on a known location of the one or more cameras with respect to the acoustic room, the direction toward the speaker may be determined from the image data. In case a stereoscopic camera is provided, the distance to the desired source may be additionally determined by analyzing images from the stereoscopic camera as generally known in the art.

To determine the direction toward the desired source and/or the location of the desired source, in particular the distance to the desired source, a dedicated image processing unit 125 may be provided to perform the above described image processing. To this end, the image processing unit 125 receives images or image frames of a video from the camera 120, processes the received data to determine at least the direction toward the desired source, and provides the determined direction, and optionally location, to the direct-path beamforming unit 130.

Although a camera 120 is presented in Figure 2 for recording the reverberant environment including the source object, one or several sensors that perform ranging of the acoustic room, such as a radar sensor or an infrared sensor, may be used to determine at least the direction toward the desired source. By way of example, an infrared sensor may be used to determine the relative location or locations of one or several human beings with respect to the microphone array. The sensors may operate based on individual rays or be provided to record continuous scanning images of the environment. Both, the camera or cameras 120 and the ranging sensors may be located and oriented inside the acoustic room so as to capture at least those regions of the room where a desired source may be present. Ideally, the camera 120 and/or the one or more ranging sensors cover the entire area of the acoustic room from which the microphone array can capture sound waves.

As described above, the direct-path component $\boldsymbol{a}_d$ of the acoustic transfer function between the desired source and the microphone array can be determined based on the knowledge of the direction toward the desired source. To determine the direct-path response to the observed signal, a direct-path steering vector is determined by the direct-path beamforming unit 130 according to Equation (9):

$$\boldsymbol{w}_d = \frac{\boldsymbol{a}_d}{\boldsymbol{a}_d^H \boldsymbol{a}_d} \quad (9)$$

wherein $^H$ denotes the conjugate transpose. The direct-path steering vector is thus normalized.

As described above, the sound field generated by the sources including the desired source is recorded by the microphone array 100 as shown in Figure 2. The recorded multi-channel signal is sampled using a sampling unit 104 and converted into a digital signal, e.g., using an A/D converter. Consecutive, potentially overlapping time frames or windows of the sampled multi-channel signal are then transformed from the time domain into the frequency domain, for instance using a DFT unit 106. The present disclosure is, however, not limited to using a Discrete Fourier transform but may be implemented using other transforms known in the art. Generally, it is assumed that the length of the window or time frame is much larger than the length of the acoustic transfer function such that Equation (2) applies. In addition to the sampling unit 104 and the DFT unit 106, the generalized beamformer according to the present disclosure may include further components as known in the art, such as one or several filtering units for filtering the captured multi-channel audio signals, for instance a high pass filter to block signal parts that are typically heavily overlaid by noise on the one hand and do not contain parts of the desired speech signal and/or a low-pass filter to block signal parts outside a typical speech spectrum, if the desired source is a human speaker. Furthermore, one or several amplifiers for amplifying captured audio signals may be provided. Further components as known in the art may be provided as part of the generalized beamformer.

Based on the direct-path steering vector $\boldsymbol{w}_d$, the direct-path response to the observed signal $\hat{\boldsymbol{x}}_d$ is estimated according to Equation (10) by means of the direct-path signal estimator 160:

$$\hat{\boldsymbol{x}}_d = \boldsymbol{w}_d^H \boldsymbol{y} \quad (10)$$

This linear estimate of the direct-path response to the observed signal therefore corresponds to performing delay-sum beamforming for the microphone array with the direct-path steering vector as the delay filter.

With regard to the multi-channel observed signal, the direct-path steering vector $\boldsymbol{w}_d$ derived from the direction toward the desired source specifies a subspace of the microphone space. The direct-path signal component, of which the direct-path response to the observed signal is a linear estimate, lives in this subspace of the microphone space. For the corresponding delay-sum beamformer, this subspace is also the steering vector subspace. In other words, the direct-path vector signal component is the projection of the full-room vector signal of the desired source onto the direct-path steering vector. Under the assumption that no point interferers are present with a non-zero component in the direction of the direct-path steering vector, the linear estimate $\hat{\boldsymbol{x}}_d$ determined by projecting the entire observed signal $\boldsymbol{y}$ into the subspace of the direct-path steering vector $\boldsymbol{w}_d = \boldsymbol{W}_{direct}^d$ gives a good estimate for the direct-path vector signal component of the desired source.

The objective for separating a source signal of the desired source is to find the full-room vector signal of that desired source. The full-room vector signal, however, corresponds to the sum of the direct-path vector signal and the reverberant-path vector signal. As the direct-path steering vector is known, finding the full-room steering vector is equivalent to finding the reverberant-path steering vector, thus, finding the reverberant-path component of the acoustic transfer function.

To recover the unknown reverberant-path component of the acoustic transfer function, the acoustic transfer function is partitioned as shown in Equation (11):

$$\boldsymbol{a} = (1+\alpha)\boldsymbol{a}_d + \hat{\boldsymbol{a}}_r \quad (11)$$

wherein the scalar $\alpha = \langle \boldsymbol{a}_d, \boldsymbol{a}_r \rangle$ is determined from the inner product of the direct-path component $\boldsymbol{a}_d$ and the reverberant-path component $\boldsymbol{a}_r$ of the acoustic transfer function and $\hat{\boldsymbol{a}}_r$ is accordingly set to $\hat{\boldsymbol{a}}_r = \boldsymbol{a}_r - \alpha \boldsymbol{a}_d$. Consequently, $\boldsymbol{a}_d$ and $\hat{\boldsymbol{a}}_r$ are orthogonal.

In a noiseless case, the delay-sum beamformer aimed at the subspace of $\hat{\boldsymbol{a}}_r$ should produce an estimate of the reverberant-path response to the observed signal $\hat{\boldsymbol{x}}_r$ that is highly correlated with the estimate of the direct-path response to the observed signal $\hat{\boldsymbol{x}}_d$ .

Consequently, the following optimization problem to find this delay-sum beamformer, that is simply a scaled version of the modified reverberant-path component of the acoustic transfer function, can be defined:

$$\max_{\boldsymbol{w}_r} Re\left(\boldsymbol{E}\left[\boldsymbol{w}_d^H \boldsymbol{y}\boldsymbol{y}^H \boldsymbol{w}_r\right]\right) \quad (12)$$

$$s.t.\ Im\left(\boldsymbol{E}\left[\boldsymbol{w}_d^H \boldsymbol{y}\boldsymbol{y}^H \boldsymbol{w}_r\right]\right) = 0 \quad (13)$$

$$\|\boldsymbol{w}_r\|_2 = 1 \quad (14)$$

$$\boldsymbol{w}_r^H \boldsymbol{w}_d = 0 \quad (15)$$

wherein *Re*( ) denotes the real part, *Im*( ) denotes the imaginary part, ***E***[ ] denotes the expectation, and $\| \|_2$ denotes the 2-norm. The expectation ***E***[ ] can be accumulated over time, e.g., the frame number m, and/or over the frequency bin index k.

According to Equation (12), the reverberant-path component $\boldsymbol{w}_r$ of the acoustic transfer function is determined by maximizing the real part of the expectation of the inner product $\langle\hat{\boldsymbol{x}}_d,\hat{\boldsymbol{x}}_r\rangle$ of the direct-path response to the observed signal $\hat{\boldsymbol{x}}_d = \boldsymbol{w}_d^H \boldsymbol{y}$ and the reverberant-path response to the observed signal $\hat{\boldsymbol{x}}_r = \boldsymbol{w}_r^H \boldsymbol{y}$ under the conditions that the expectation is purely real (Equation (13)), the reverberant-path component $\boldsymbol{w}_r$ is normalized (Equation (14)), and the reverberant-path component $\boldsymbol{w}_r$ is orthogonal to the direct-path component $\boldsymbol{w}_d$ (Equation (15)).

Equations (12) to (15) therefore determine the unit-norm reverberant-path steering vector that maximizes a cross moment of the direct-path response to the observed signal and the reverberant-path response to the observed signal. In the specific, nonlimiting case of Equations (12) to (15), the reverberant-path steering vector maximizes a second order, mean-free cross moment between the direct-path response to the observed signal and the reverberant-path response to the observed signal. The present disclosure is, however, not limited to maximizing a mean-free cross moment but can alternatively maximize a second order central cross moment of the direct-path response to the observed signal and the reverberant-path response to the observed signal. Thus, the reverberant-path steering vector may be determined by maximizing the covariance of the direct-path response to the observed signal and the reverberant-path response to the observed signal. Alternatively, the correlation between the direct-path response to the observed signal and the reverberant-path response to the observed signal may be maximized by dividing the covariance by the respective standard deviations $\sigma_d$ and $\sigma_r$ of the direct-path response to the observed signal and the reverberant-path response to the observed signal, respectively. Other cross moments of even order may be maximized as an alternative.

Determining the reverberant-path steering vector $\boldsymbol{w}_r$ according to Equations (12) to (15) by maximizing the covariance between the direct-path response to the observed signal obtained with the direct-path steering vector $\boldsymbol{w}_d$ and the unknown reverberant-path response to the observed signal makes use of the strong correlation between the direct-path room response and the reverberant-path room response of the desired source. In the exemplary embodiment of the generalized beamformer 150 according to Figure 2, the above described maximization is performed by a reverberant-path beamforming unit 140 wherein the reverberant-path response to the observed signal $\hat{\boldsymbol{x}}_r$ is determined by a reverberant-path signal estimator 170. It is understood that the reverberant-path signal estimator may be incorporated into the reverberant-path beamforming unit 140.

Whilst the optimization problem in Equations (12) to (15) is non-convex, it does have a simple analytical solution. In particular, it can be shown that

$$\widehat{\boldsymbol{w}}_r = \left(\boldsymbol{I} - \frac{\boldsymbol{a}_d \boldsymbol{a}_d^H}{\boldsymbol{a}_d^H \boldsymbol{a}_d}\right) \frac{\boldsymbol{P}_y \boldsymbol{a}_d}{\boldsymbol{a}_d^H \boldsymbol{a}_d} \quad (16)$$

with $\boldsymbol{w}_r = \frac{\widehat{\boldsymbol{w}}_r}{\sqrt{\widehat{\boldsymbol{w}}_r^H \widehat{\boldsymbol{w}}_r}}$ gives a solution to the optimization problem.

Here, ***I*** denotes the identity matrix and $\boldsymbol{P}_y$ denotes the covariance matrix of the observed signal y according to

Equation (17):

$$\boldsymbol{P_y} = (\boldsymbol{a}_d + \boldsymbol{a}_r)\boldsymbol{P_x}(\boldsymbol{a}_d + \boldsymbol{a}_r)^H + \boldsymbol{P_n} \qquad (17)$$

wherein it is assumed that the target signal of the desired source is independent of the noise.

As in the case of the blind source separation algorithm, Equation (16) produces a normalized steering vector $\boldsymbol{w}_r$ that estimates the reverberant-path component of the true acoustic transfer function of the desired source. To create an accurate estimate of the target subspace, this reverberant-path component is scaled in a second step.

By again exploiting the known direct-path component of the acoustic transfer function, the relative gain of the direct-path steering vector and the reverberant-path steering vector can be determined. The proper relative gain of the direct-path component and the reverberant-path component of the acoustic transfer function can be determined from the root-mean-square power of the corresponding direct-path response to the observed signal $\hat{\boldsymbol{x}}_d$ and the reverberant-path response to the observed signal $\hat{\boldsymbol{x}}_r$. In other words, the standard deviations $\sigma_d$ and $\sigma_r$ of the direct-path response to the observed signal and the reverberant-path response to the observed signal, respectively, are determined to estimate the ratio of the direct-path and reverberant-path acoustic transfer functions of the desired source as shown in Equations (18) and (19):

$$\sigma_d = \sqrt{\boldsymbol{w}_d^H \boldsymbol{P}_y \boldsymbol{w}_d} \qquad (18)$$

$$\sigma_r = \sqrt{\boldsymbol{w}_r^H \boldsymbol{P}_y \boldsymbol{w}_r} \qquad (19)$$

The standard deviations according to Equations (18) and (19) can be determined by the direct-path signal estimator 160 and the reverberant-path signal estimator 170 according to Figure 2, respectively. A scaling unit (not shown) can then apply the determined gain as a relative scaling to the direct-path steering vector and/or the reverberant-path steering vector before combining the direct-path steering vector and the reverberant-path steering vector to determine the room response.

In particular, an appropriately scaled estimate of the true acoustic transfer function $\boldsymbol{w}_{est}$ for the desired source can be expressed as in Equation (20):

$$\boldsymbol{w}_{est} = \boldsymbol{a}_d + \frac{\sigma_r \|\boldsymbol{a}_d\|_2}{\sigma_d} \boldsymbol{w}_r \qquad (20)$$

A signal combiner 180 thus determines the room response by estimating the true acoustic transfer function $\boldsymbol{w}_{est}$ from a scaled combination of the direct-path component of the acoustic transfer function and the reverberant-path component of the acoustic transfer function.

As mentioned above, the acoustic transfer function for the desired source with respect to the microphone array sensitively depends on the location of the desired source. Therefore, if the desired source is a human speaker, movement of the speaker with respect to the microphone array necessitates recalculation of the acoustic transfer function $\boldsymbol{w}_{est}$. The described method may therefore determine the acoustic transfer function $\boldsymbol{w}_{est}$ for each speech frame, i.e. time frame that contains a speech signal. This may also be done while the speaker remains stationary. The resulting estimates of the acoustic transfer function $\boldsymbol{w}_{est}$ may then be used by a signal-to-interference-plus-noise ratio (SINR) unit 185 to maximize the SINR of the source signal of the desired source over a plurality of time intervals of the observed signal.

Based on a combination of the direct-path response to the observed signal $\hat{\boldsymbol{x}}_d$ determined by the direct-path signal estimator 160 and the reverberant-path response to the observed signal $\hat{\boldsymbol{x}}_r$ determined by the reverberant-path signal estimator 170, the signal combiner 180 may separate a source signal $\hat{\boldsymbol{x}}^d$ of the desired source by projecting the observed signal y into the subspace of the estimated acoustic transfer function $\boldsymbol{w}_{est}$. Consequently, the source signal of the desired source may be isolated as shown in Equation (21):

$$\hat{\boldsymbol{x}}^d = \boldsymbol{w}_{est}^H \boldsymbol{y} \qquad (21)$$

The method of isolating a source signal according to Equation (21) may be seen as a filter-sum beamformer based on a scaled combination of the direct-path steering vector and the reverberant-path steering vector described above.

In the case of an correlated noise with a scaled identity covariance matrix, the above described method alone provides an effective means of estimating the acoustic transfer function of the desired source. In addition, the estimate of the acoustic transfer function may be used as a preconditioning step to improve the performance of a blind source separation algorithm by replacing the original estimate of the acoustic transfer function, i.e., the direct-path acoustic transfer function, with the estimate $\boldsymbol{w}_{est}$ .

An alternative embodiment of the generalized beamformer 150 of the present disclosure is schematically shown in Figure 3. According to this embodiment, the source location and/or direction are determined using a delay-sum beamforming unit 220 instead of the camera 120. A direction-of-arrival (DOA) angle with respect to the microphone array may be determined as a function of the delay of a speech signal between the individual audio signals captured by the microphones of the microphone array. Such a delay may for instance, be computed by a cross-correlation of the different microphone signals. Other techniques as known in the art for determining the DOA based on a multi-channel microphone signal may be applied to determine at least the direction toward the desired source by the delay-sum beamforming unit 220. The determined direction and/or source location are then provided as input to the direct-path beamforming unit 130.

Before determining the DOA of a human speaker, the delay-sum beamforming unit 220 may perform voice activity detection on the observed signal to determine whether the observed signal contains a speech signal.

Voice activity detection may be carried out based on measures determined from the observed signal, wherein the different measures include spectral slope, correlation coefficients, log likelihood ratios, cepstral and weighted cepstral coefficients, which are determined from the Fourier coefficients of the logarithm of the spectral density, as well as modified distance measures, short-time energy, zero-crossing rate, linear prediction coefficients, spectral entropy, a least-square periodicity measure, and wavelet transform coefficients. Voice activity detection may further include a noise reduction stage, e.g. by a spectral subtraction, filtering for echo compensation and/or determining signal coherence of two or more audio signals captured by spaced-apart microphones in order to filter out diffuse background noise and/or sound reflections.

To prevent that human utterances, which are not verbal utterances, like sneezing, coughing, whistling or the like, are accidentally detected as a speech signal, the delay-sum beamforming unit may further perform speech recognition on the observed signal, including detecting phonemes, words, phrases and/or sentences in the microphone signal.

Speech recognition may be carried out according to any of the methods known in the art. In particular, a speech recognition method may be based on hidden Markov models using cepstral coefficients. The employed hidden Markov model may further involve context dependency for phonemes, cepstral normalisation to normalise for different speakers and/or recording conditions, vocal tract length normalisation (VTLN) for male/female normalisation, and/or maximum likelihood linear regression (MLLR) for more general speaker adaptation. Aside from using the coefficients alone, their temporal dynamics may be included using so-called delta and delta-delta coefficients. Alternatively, splicing and an LDA-based projection followed perhaps by heteroscedastic linear discriminant analysis (HLDA) may be used. A speech recognition system based on hidden Markov models may further be adapted using discriminative training techniques, such as maximum mutual information (MMI), minimum classification error (MCE) and minimum phone error (MPE). As an alternative to hidden Markov models, the speech recognition method may be based on dynamic time warping (DTW). Also, neural networks may be used for certain aspects of speech recognition such as phoneme classification, isolated word recognition and speaker adaptation. Further, neural networks may be used as a pre-processing step to the actual speech recognition step. Other methods, which may be used for detecting a speech signal in the microphone signal using speech recognition include, but are not limited to, power spectral analysis (FFT), linear predictive analysis (LPC), wherein a specific speech sample at a current time can be approximated as a linear combination of past speech samples and wherein the predictor coefficients are transformed to cepstral coefficients, perceptual linear prediction (PLP), which is based on the short term spectrum of speech and uses several psycho-physically based transformations, mel scale cepstral analysis (MEL), wherein the spectrum is warped according to the MEL scale and wherein cepstral smoothing is used to smooth the modified power spectrum, relative spectra filtering (RASTA) to compensate for linear channel distortions, which can be used either in the log spectral or cepstral domains, and energy normalisation to compensate for variances in loudness, in the microphone recording as well as in the signal energy between different phoneme sounds.

Finally, statistical language modelling may be used for speech recognition, wherein a statistical language model assigns probability distributions to words and sentences of a language. In statistical language modelling, at least one of the spoken words is recognised on the grounds of one or more recognised preceding words. An example for statistical language modelling may be given, for instance, by the well-known n-gram language modelling.

The speech detection may be carried out continuously on a frame-by-frame basis, or with a predetermined, possibly configurable, frame-size, respectively overlap, for instance once every 500 ms or every second. In addition, a processor unit of the delay-sum beamforming unit may be adapted to periodically or continuously check for a speech signal in the captured multi-channel signal.

Detecting a speech signal may further comprise detecting speech activity of at least two different human speakers using voice recognition based on speaker recognition methods. While speaker recognition generally denotes the art of identifying the person who is speaking by characteristics of their voices, so-called biometrics, voice recognition according to the present embodiment may be limited to detecting that speech signals of at least two different human speakers are comprised in the detected speech signal. This may be achieved by a spectral analysis of the speech signal and by identifying at least two different spectral characteristics of the speech signal, without comparing the detected spectral characteristics and/or voice biometrics to predetermined spectral characteristics and/or voice biometrics associated with a specific person.

The speech signals of the at least two different human speakers may be contained in the detected speech signal at the same time, i.e. when at least two different human speakers utter verbal sounds simultaneously, or may be contained in the detected speech signal in different, possibly consecutive and/or overlapping, time intervals of the detected speech signal, i.e. in the case of an actual conversation between the at least two human speakers. The speaker recognition or speaker differentiation may be carried out using frequency estimation, hidden Markov models, Gaussian mixture models, pattern matching algorithms, neural networks, matrix representation, vector quantization, decision trees, a sequence of covariance lags of the spectral density of the signal, an autoregressive moving-average (ARMA) model, a spectral analysis based on the pitch of the detected speech signal, a detection of formants in the spectrum, or any other spectral characteristics as known in the art.

In the context of the present disclosure, detecting speech signals of at least two different human speakers may be used to determine individual directions or DOAs with respect to these speakers to isolate source signals of more than one desired source from the observed signal.

As the remaining units and processing steps of the generalized beamformer of Figure 3 correspond to the respective units and processing steps of the generalized beamformer of Figure 2, a repeated description is omitted to avoid obscuring the present disclosure. It shall, however, be understood that the variations and modifications described above with respect to the generalized beamformer of Figure 2 can also be applied to the generalized beamformer of Figure 3.

In addition, a generalized beamformer comprising the delay-sum beamforming unit 220 and one or more cameras 120 may be provided. In this case, the DOA determined by the delay-sum beamforming unit 220 based on a captured speech signal may be used to single out a human speaker from a group of detected potential speakers as provided by the image processing unit 125. The output of the delay-sum beamforming unit 220 may also be used to confirm or correct the output of the image processing unit 125 and vice versa.

The described methods and apparatuses provide a generalized beamformer with the ability to obtain a gain in the signal-to-interference ratio that is higher than that of a conventional direct-path beamformer with no additional information over that provided to a conventional direct-path beamformer. Thus, the generalized beamformer computes the relative room response using the same information that is available to a conventional direct-path beamformer. The described generalized beamformer is particularly effective in removing diffuse noise and sensor self-noise from the estimate of the target signal of the desired source.

If point interferers are present with a non-zero component in the direction of the direct-path steering vector, the performance of the described generalized beamformer will drop, as it is the case for conventional direct-path beamforming. However, by optimizing over different time intervals and searching for maximum gain, it is possible to detect intermittent interferers and suppress their impact on the isolated source signal. The described method of generalized beamforming may be interpreted as a form of informed blind source separation.

Different from commonly known beamforming techniques that aim at speech dereverberation, the described generalized beamforming makes use of the significant signal power in the reverberant-path components of the target signal to improve the SINR. Furthermore, distinguishing between the direct-path and the reverberant-path signals for the beamforming calculation by first determining the steering vectors for the direct-path and reverberant-path components and then combining them provides a new way of combining the direct-path response and the reverberant-path response.

The improved signal-to-interference-plus-noise ratio of the isolated source signal further improves the results of the above described speech recognition techniques and correspondingly reduces the error-rate of operating devices such as navigation systems, voice command devices, or home entertainment systems based on speech.

The above described generalized beamforming may be performed and implemented by means of processing circuitry. The processing circuitry may comprise hardware (e.g., one or more processing units and a non-volatile memory) and software (e.g., program code stored in the memory, for execution by the one or more processing units). The processor units may include dedicated hardware components such as a DSP, an FFT unit, a filtering unit, a beamforming unit, and further units to perform the above described processing of the audio signals. Alternatively or additionally, the processor units may be configured to execute instructions stored on the memory for performing the operations described above. The generalized beamformer may in particular include processor-readable instructions encoded on a memory directing the processor unit to perform the above described methods.

The present disclosure further provides a non-transitory computer-readable medium storing instructions that, when performed by a processor, cause the processor to perform a method according to any of the above-described embodiments.

Instructions or software to control a processor to perform the methods as described above may be written as computer programs, code segments, instructions or any combination thereof, for individually or collectively instructing or configuring the processor to operate as a machine or special-purpose computer to perform the operations of the methods as described above. In one example, the instructions or software may include machine code that is directly executed by the processor, such as machine code produced by a compiler. In another example, the instructions or software may include higher level code that is executed by the processor using an interpreter. Programmers of ordinary skill in the art can readily write the instructions or software based on the description of the methods provided herein.

## Claims

1. An apparatus for determining a room response of a desired source (110) in a reverberant environment from an observed signal received by a plurality of microphones (100), comprising a processing circuitry (150) configured to:

   determine a direct-path steering vector for the plurality of microphones (100) based on a known direction and/or location of the desired source (110);
   determine a reverberant-path steering vector for the plurality of microphones (100) that maximizes a cross moment of a direct-path response to the observed signal and a reverberant-path response to the observed signal; and
   determine the room response based on a combination of the direct-path steering vector and the reverberant-path steering vector.

2. The apparatus of claim 1, wherein the processing circuitry (150) is further configured to apply a relative scaling to the direct-path steering vector and the reverberant-path steering vector before combining the direct-path steering vector and the reverberant-path steering vector.

3. The apparatus of claim 2, wherein a scaling factor for the relative scaling is based on a ratio of standard deviations of the reverberant-path response to the observed signal and the direct-path response to the observed signal.

4. The apparatus of any one of claims 1 to 3, wherein the processing circuitry (150) is further configured to maximize a second order central cross moment of the direct-path response to the observed signal and the reverberant-path response to the observed signal.

5. The apparatus of any one of the preceding claims, wherein the processing circuitry (150) is further configured to determine the reverberant-path steering vector such that the reverberant-path steering vector is orthogonal to the direct-path steering vector.

6. The apparatus of any one of the preceding claims, the processing circuitry (150) is further configured to determine the direction and/or the location of the desired source (110) with respect to the plurality of microphones (100) based on source detection performed on images of the room recorded by a camera (120).

7. The apparatus of any one of the preceding claims, the processing circuitry (150) is further configured to determine the direction and/or the location of the desired source (110) with respect to the plurality of microphones (100) based on direct beamforming using the plurality of microphones (100).

8. The apparatus of any one of the preceding claims, the processing circuitry (150) is further configured to:

   determine the direct-path response to the observed signal using the direct-path steering vector;
   determine the reverberant-path response to the observed signal using the reverberant-path steering vector; and
   separate a source signal of the desired source (110) based on a combination of the direct-path response and the reverberant-path response.

9. The apparatus of claim 8, the processing circuitry (150) is further configured to maximize an SINR of the source signal over a plurality of time intervals of the observed signal.

10. The apparatus of one of the preceding claims, the processing circuitry (150) is further configured to transform the observed signal from a time domain into a frequency domain and to determine the room response for each frequency bin of the transformed observed signal.

**11.** The apparatus of any one of the preceding claims, further comprising:

the plurality of microphones (100) configured to capture a multi-channel sound signal;
wherein the processing circuitry (150) is further configured to perform temporal sampling on the multi-channel sound signal to generate the observed signal.

**12.** The apparatus of any one of the preceding claims, further comprising:
a camera (120) configured and arranged to record images of a room corresponding to the room response.

**13.** A method for determining a room response of a desired source (110) in a reverberant environment from an observed signal received by a plurality of microphones (100), the method comprising:
determining a direct-path steering vector for the plurality of microphones (100) based on a known direction and/or location of the desired source (110); the method being further **characterised by** comprising:

determining a reverberant-path steering vector for the plurality of microphones (100) that maximizes a cross moment of a direct-path response to the observed signal and a reverberant-path response to the observed signal; and
determining the room response based on a combination of the direct-path steering vector and the reverberant-path steering vector.

**14.** The method of claim 13, further comprising:
separating a source signal of the desired source (110) using the determined room response.

**15.** A computer-readable medium storing instructions that when executed on a processor cause the processor to perform the method of claim 13 or 14.

## Patentansprüche

**1.** Vorrichtung zum Ermitteln einer Raumimpulsantwort einer gewünschten Quelle (110) in einer Nachhallumgebung aus einem überwachten Signal, das von einer Vielzahl von Mikrofonen (100) empfangen wurde, wobei die Vorrichtung eine Verarbeitungsschaltung (150) umfasst, die konfiguriert ist zum:

Ermitteln eines Direktpfad-Lenkvektors für die Vielzahl von Mikrofonen (100) basierend auf einer bekannten Richtung und/oder einem bekannten Standort der gewünschten Quelle (110);
Ermitteln eines Nachhallpfad-Lenkvektors für die Vielzahl von Mikrofonen (100), der ein Kreuzmoment einer Direktpfadantwort auf das überwachte Signal und einer Nachhallpfadantwort auf das überwachte Signal maximiert; und
Ermitteln der Raumimpulsantwort basierend auf einer Kombination des Direktpfad-Lenkvektors und des Nachhallpfad-Lenkvektors.

**2.** Vorrichtung nach Anspruch 1, wobei die Verarbeitungsschaltung (150) außerdem konfiguriert ist zum Anwenden einer relativen Skalierung an den Direktpfad-Lenkvektor und den Nachhallpfad-Lenkvektor, bevor der Direktpfad-Lenkvektor und der Nachhallpfad-Lenkvektor kombiniert werden.

**3.** Vorrichtung nach Anspruch 2, wobei ein Skalierungsfaktor für die relative Skalierung auf einem Verhältnis von Standardabweichungen der Nachhallpfadantwort auf das überwachte Signal und der Direktpfadantwort auf das überwachte Signal basiert.

**4.** Vorrichtung nach einem der Ansprüche 1 bis 3, wobei die Verarbeitungsschaltung (150) außerdem konfiguriert ist zum Maximieren eines zentralen Kreuzmoments zweiter Ordnung der Direktpfadantwort auf das überwachte Signal und der Nachhallpfadantwort auf das überwachte Signal.

**5.** Vorrichtung nach einem der vorhergehenden Ansprüche, wobei die Verarbeitungsschaltung (150) außerdem konfiguriert ist zum Ermitteln des Nachhallpfad-Lenkvektors, sodass der Nachhallpfad-Lenkvektor orthogonal zum Direktpfad-Lenkvektor ist.

6. Vorrichtung nach einem der vorhergehenden Ansprüche, wobei die Verarbeitungsschaltung (150) außerdem konfiguriert ist zum Ermitteln der Richtung und/oder des Standorts der gewünschten Quelle (110) in Bezug auf die Vielzahl von Mikrofonen (100) basierend auf einer Quellenerkennung, die an Bildern durchgeführt wird, die von einer Kamera (120) aufgenommen werden.

7. Vorrichtung nach einem der vorhergehenden Ansprüche, wobei die Verarbeitungsschaltung (150) außerdem konfiguriert ist zum Ermitteln der Richtung und/oder des Standorts der gewünschten Quelle (110) in Bezug auf die Vielzahl von Mikrofonen (100) basierend auf einer direkten Strahlformung mithilfe der Vielzahl von Mikrofonen (100).

8. Vorrichtung nach einem der vorhergehenden Ansprüche, wobei die Verarbeitungsschaltung (150) außerdem konfiguriert ist zum:

   Ermitteln der Direktpfadantwort auf das überwachte Signal mithilfe des Direktpfad-Lenkvektors;
   Ermitteln der Nachhallpfadantwort auf das überwachte Signal mithilfe des Nachhallpfad-Lenkvektors; und
   Separieren eines Quellensignals von der gewünschten Quelle (110) basierend auf einer Kombination der Direktpfadantwort und der Nachhallpfadantwort.

9. Vorrichtung nach Anspruch 8, wobei die Verarbeitungsschaltung (150) außerdem konfiguriert ist zum Maximieren eines SINR des Quellensignals über eine Vielzahl von Zeitintervallen des überwachten Signals.

10. Vorrichtung nach einem der vorhergehenden Ansprüche, wobei die Verarbeitungsschaltung (150) außerdem konfiguriert ist zum Transformieren des überwachten Signals aus einem Zeitbereich in einen Frequenzbereich und zum Ermitteln der Raumimpulsantwort für jedes Frequenzbin des transformierten überwachten Signals.

11. Vorrichtung nach einem der vorhergehenden Ansprüche, die außerdem umfasst:

    eine Vielzahl von Mikrofonen (100), die konfiguriert sind zum Erfassen eines Mehrkanal schall signal s;
    wobei die Verarbeitungsschaltung (150) außerdem konfiguriert ist zum Durchführen eines zeitlichen Abtastens des Mehrkanalschallsignals, um das überwachte Signal zu erzeugen.

12. Vorrichtung nach einem der vorhergehenden Ansprüche, die außerdem umfasst:
    eine Kamera (120), die konfiguriert und geeignet ist zum Aufnehmen von Bildern eines Raums, welcher der Raumimpulsantwort entspricht.

13. Verfahren zum Ermitteln einer Raumimpulsantwort einer gewünschten Quelle (110) in einer Nachhallumgebung aus einem überwachten Signal, das von einer Vielzahl von Mikrofonen (100) empfangen wurde, wobei das Verfahren umfasst:

    Ermitteln eines Direktpfad-Lenkvektors für die Vielzahl von Mikrofonen (100) basierend auf einer bekannten Richtung und/oder einem bekannten Standort der gewünschten Quelle (110);
    wobei das Verfahren außerdem **dadurch gekennzeichnet ist, dass** es umfasst:

    Ermitteln eines Nachhallpfad-Lenkvektors für die Vielzahl von Mikrofonen (100), der ein Kreuzmoment einer Direktpfadantwort auf das überwachte Signal und einer Nachhallpfadantwort auf das überwachte Signal maximiert; und
    Ermitteln der Raumimpulsantwort basierend auf einer Kombination des Direktpfad-Lenkvektors und des Nachhallpfad-Lenkvektors.

14. Verfahren nach Anspruch 13, das außerdem umfasst:
    Separieren eines Quellensignals der gewünschten Quelle (110) mithilfe der ermittelten Raumimpulsantwort.

15. Computerlesbares Medium, in dem Befehle gespeichert sind, die, wenn sie in einem Prozessor ausgeführt werden, den Prozessor veranlassen, das Verfahren nach einem der Ansprüche 13 oder 14 auszuführen.

## Revendications

1. Appareil pour déterminer une réponse d'une source désirée (110) d'une pièce dans un environnement réverbérant à partir d'un signal observé reçu par une pluralité de microphones (100), comprenant une circuiterie de traitement (150) configurée pour :

déterminer un vecteur de direction en chemin direct pour la pluralité de microphones (100) en fonction d'une direction et/ou d'un emplacement connus de la source désirée (110) ;
déterminer un vecteur de direction en chemin réverbérant pour la pluralité de microphones (100) qui maximise un moment croisé d'une réponse en chemin direct au signal observé et d'une réponse en chemin réverbérant au signal observé ; et
déterminer la réponse de la pièce en fonction d'une combinaison du vecteur de direction en chemin direct et du vecteur de direction en chemin réverbérant.

**2.** Appareil selon la revendication 1, dans lequel la circuiterie de traitement (150) est en outre configurée pour appliquer une mise à l'échelle relative au vecteur de direction en chemin direct et au vecteur de direction en chemin réverbérant avant de combiner le vecteur de direction en chemin direct et le vecteur de direction en chemin réverbérant.

**3.** Appareil selon la revendication 2, dans lequel un facteur d'échelle pour la mise à l'échelle relative est basé sur un rapport d'écarts types de la réponse en chemin réverbérant au signal observé et de la réponse en chemin direct au signal observé.

**4.** Appareil selon l'une quelconque des revendications 1 à 3, dans lequel la circuiterie de traitement (150) est en outre configurée pour maximiser un moment croisé central de deuxième ordre de la réponse en chemin direct au signal observé et de la réponse en chemin réverbérant au signal observé.

**5.** Appareil selon l'une quelconque des revendications précédentes, dans lequel la circuiterie de traitement (150) est en outre configurée pour déterminer le vecteur de direction en chemin réverbérant de telle sorte que le vecteur de direction en chemin réverbérant est orthogonal par rapport au vecteur de direction en chemin direct.

**6.** Appareil selon l'une quelconque des revendications précédentes, la circuiterie de traitement (150) est en outre configurée pour déterminer la direction et/ou l'emplacement de la source désirée (110) par rapport à la pluralité de microphones (100) en fonction d'une détection de source réalisée sur des images de la pièce enregistrées par une caméra (120).

**7.** Appareil selon l'une quelconque des revendications précédentes, la circuiterie de traitement (150) est en outre configurée pour déterminer la direction et/ou l'emplacement de la source désirée (110) par rapport à la pluralité de microphones (100) en fonction d'un filtrage spatial direct à l'aide de la pluralité de microphones (100).

**8.** Appareil selon l'une quelconque des revendications précédentes, la circuiterie de traitement (150) est en outre configurée pour :

déterminer la réponse en chemin direct au signal observé à l'aide du vecteur de direction en chemin direct ;
déterminer la réponse en chemin réverbérant au signal observé à l'aide du vecteur de direction en chemin réverbérant ; et
séparer un signal source de la source désirée (110) en fonction d'une combinaison de la réponse en chemin direct et de la réponse en chemin réverbérant.

**9.** Appareil selon la revendication 8, la circuiterie de traitement (150) est en outre configurée pour maximiser un SINR du signal source sur une pluralité d'intervalles de temps du signal observé.

**10.** Appareil selon l'une des revendications précédentes, la circuiterie de traitement (150) est en outre configurée pour transformer le signal observé d'un domaine temporel en un domaine fréquentiel et pour déterminer la réponse de la pièce pour chaque segment de fréquence du signal observé transformé.

**11.** Appareil selon l'une quelconque des revendications précédentes, comprenant en outre :

la pluralité de microphones (100) configurés pour capturer un signal sonore multicanal ;
dans lequel la circuiterie de traitement (150) est en outre configurée pour réaliser un échantillonnage temporel sur le signal sonore multicanal pour générer le signal observé.

**12.** Appareil selon l'une quelconque des revendications précédentes, comprenant en outre :
une caméra (120) configurée et agencée pour enregistrer des images d'une pièce correspondant à la réponse de la pièce.

**13.** Procédé pour déterminer une réponse d'une source désirée (110) d'une pièce dans un environnement réverbérant à partir d'un signal observé reçu par une pluralité de microphones (100), le procédé comprenant :

la détermination d'un vecteur de direction en chemin direct pour la pluralité de microphones (100) en fonction d'une direction et/ou d'un emplacement connus de la source désirée (110) ;
le procédé étant en outre **caractérisé en ce qu'**il comprend :

la détermination d'un vecteur de direction en chemin réverbérant pour la pluralité de microphones (100) qui maximise un moment croisé d'une réponse en chemin direct au signal observé et d'une réponse en chemin réverbérant au signal observé ; et
la détermination de la réponse de la pièce en fonction d'une combinaison du vecteur de direction en chemin direct et du vecteur de direction en chemin réverbérant.

**14.** Procédé selon la revendication 13, comprenant en outre :
la séparation d'un signal source de la source désirée (110) à l'aide de la réponse de la pièce déterminée.

**15.** Support lisible par ordinateur sur lequel sont stockées des instructions qui lorsqu'elles sont exécutées sur un processeur amènent le processeur à mettre en œuvre le procédé selon la revendication 13 ou 14.

Fig. 1

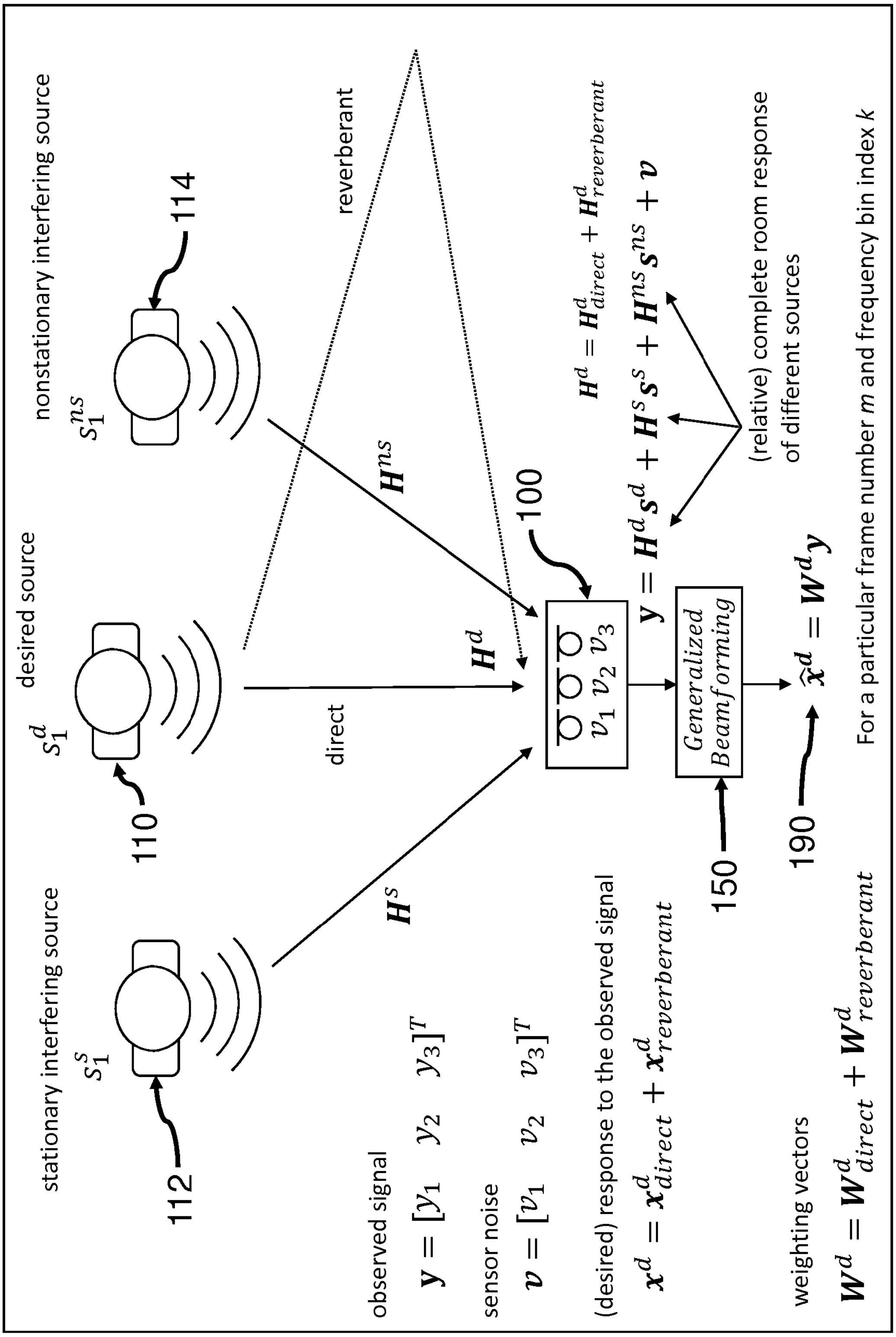
stationary interfering source
$s_1^s$
112
desired source
$s_1^d$
110
nonstationary interfering source
$s_1^{ns}$
114
reverberant
direct
$\boldsymbol{H}^s$
$\boldsymbol{H}^d$
$\boldsymbol{H}^{ns}$
100
$v_1$ $v_2$ $v_3$
$\boldsymbol{H}^d = \boldsymbol{H}^d_{direct} + \boldsymbol{H}^d_{reverberant}$
$\boldsymbol{y} = \boldsymbol{H}^d\boldsymbol{s}^d + \boldsymbol{H}^s\boldsymbol{s}^s + \boldsymbol{H}^{ns}\boldsymbol{s}^{ns} + \boldsymbol{v}$
(relative) complete room response of different sources
Generalized Beamforming
150
$\widehat{\boldsymbol{x}}^d = \boldsymbol{W}^d\boldsymbol{y}$
190
For a particular frame number $m$ and frequency bin index $k$
observed signal
$\boldsymbol{y} = [y_1 \quad y_2 \quad y_3]^T$
sensor noise
$\boldsymbol{v} = [v_1 \quad v_2 \quad v_3]^T$
(desired) response to the observed signal
$\boldsymbol{x}^d = \boldsymbol{x}^d_{direct} + \boldsymbol{x}^d_{reverberant}$
weighting vectors
$\boldsymbol{W}^d = \boldsymbol{W}^d_{direct} + \boldsymbol{W}^d_{reverberant}$

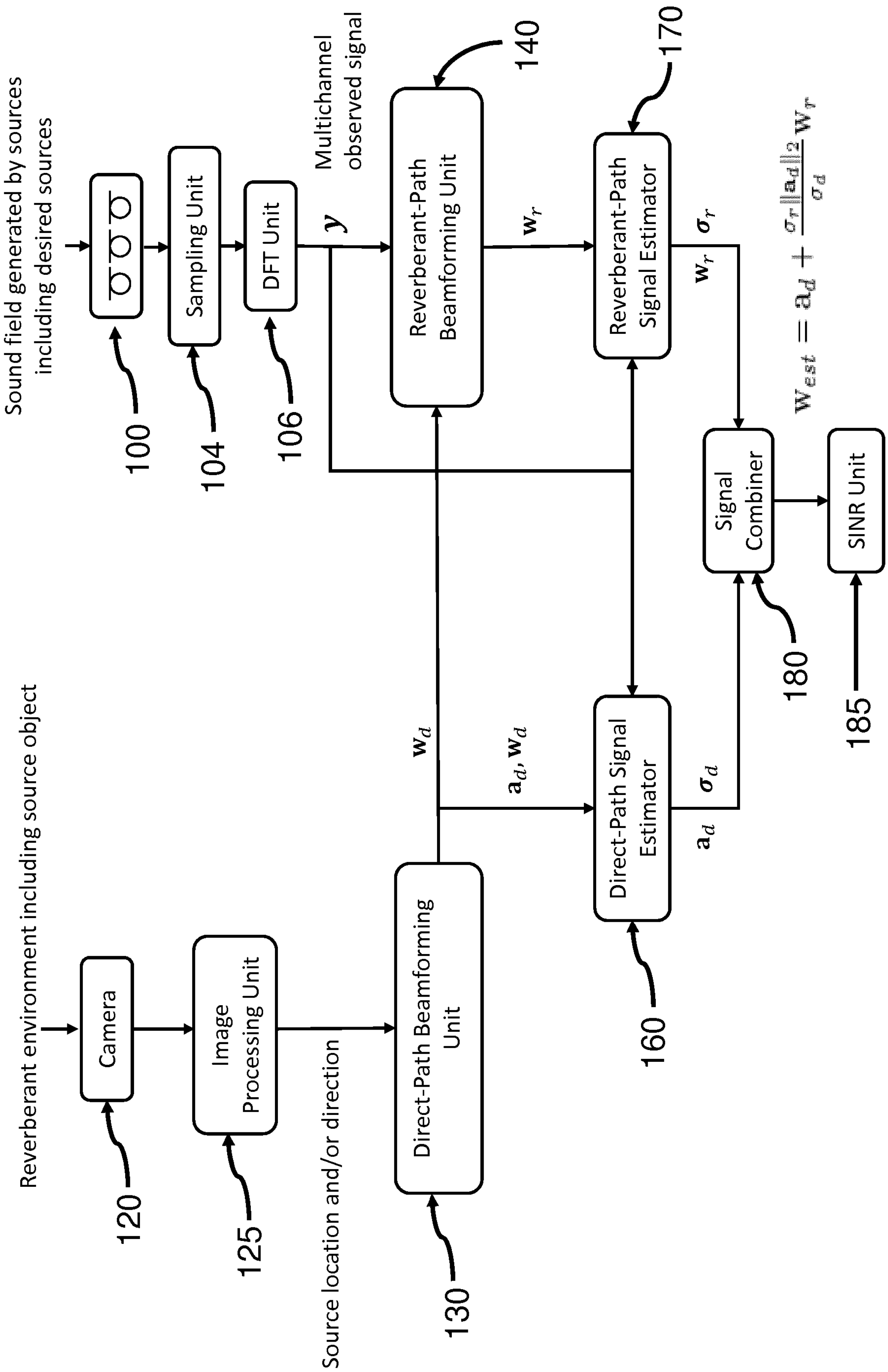
Sound field generated by sources including desired sources
100
Sampling Unit
104
DFT Unit
106
$\boldsymbol{y}$
Multichannel observed signal
Reverberant-Path Beamforming Unit
140
$\mathbf{w}_r$
Reverberant-Path Signal Estimator
170
$\mathbf{w}_r$ $\boldsymbol{\sigma}_r$
$\mathbf{w}_{est} = \mathbf{a}_d + \frac{\sigma_r \|\mathbf{a}_d\|_2}{\sigma_d} \mathbf{w}_r$
Signal Combiner
180
SINR Unit
185
Reverberant environment including source object
Camera
120
Image Processing Unit
125
Source location and/or direction
Direct-Path Beamforming Unit
130
$\mathbf{w}_d$
$\mathbf{a}_d, \mathbf{w}_d$
Direct-Path Signal Estimator
160
$\mathbf{a}_d$ $\boldsymbol{\sigma}_d$

Fig. 2

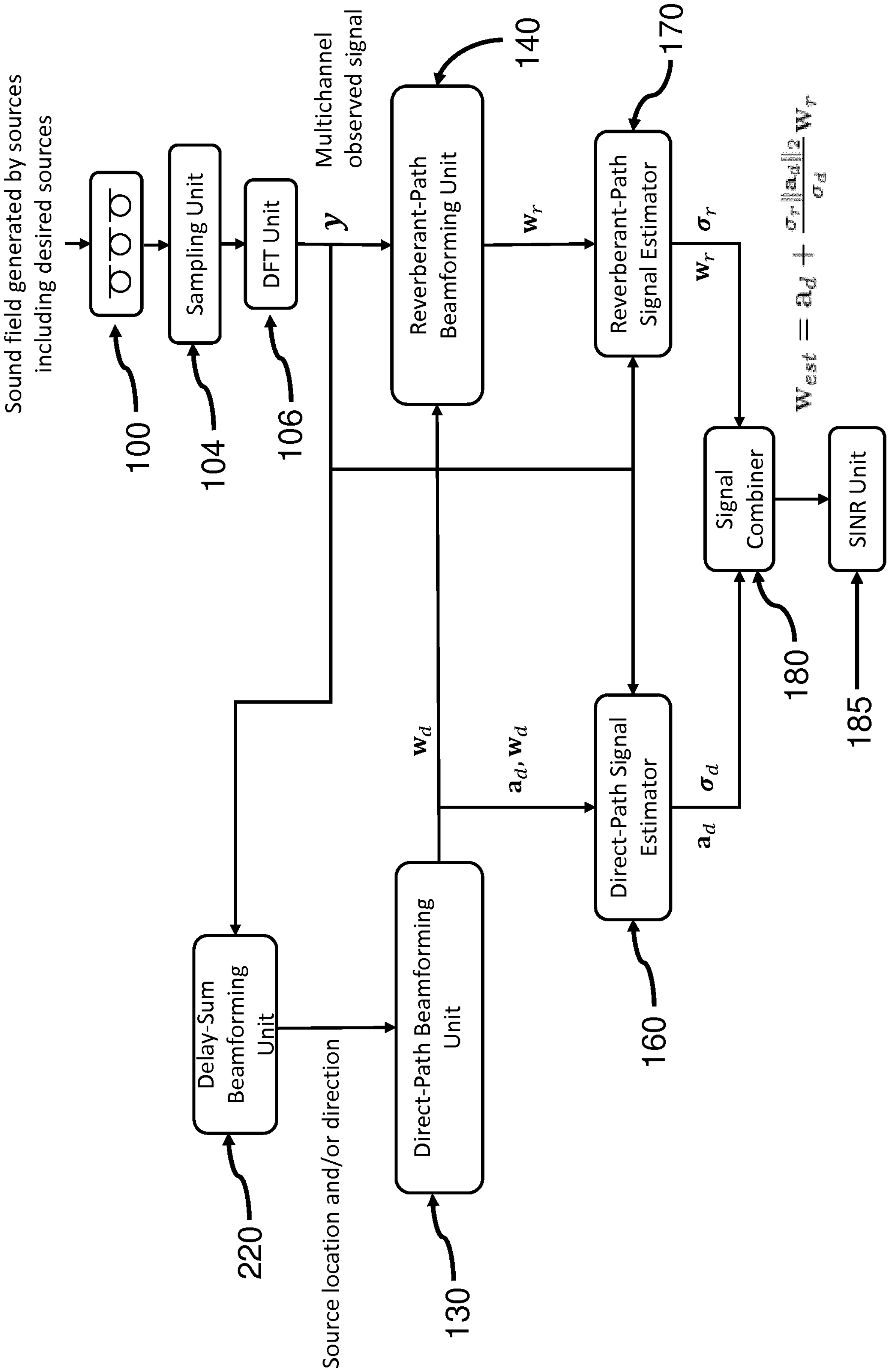
Sound field generated by sources including desired sources
100
Sampling Unit
104
DFT Unit
106
y
Multichannel observed signal
Reverberant-Path Beamforming Unit
140
$\mathbf{w}_r$
Reverberant-Path Signal Estimator
170
$\mathbf{w}_r$ $\boldsymbol{\sigma}_r$
$\mathbf{w}_{est} = \mathbf{a}_d + \frac{\sigma_r \|\mathbf{a}_d\|_2}{\sigma_d} \mathbf{w}_r$
Signal Combiner
180
SINR Unit
185
Delay-Sum Beamforming Unit
220
Source location and/or direction
Direct-Path Beamforming Unit
130
$\mathbf{w}_d$
$\mathbf{a}_d, \mathbf{w}_d$
Direct-Path Signal Estimator
160
$\mathbf{a}_d$ $\boldsymbol{\sigma}_d$

Fig. 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2642768 A1


### Non-patent literature cited in the description


- **E. VINCENT ; R. GRIBONVAL ; C. FEVOTTE.** Performance Measurement in Blind Audio Source Separation. *IEEE Transactions on Audio, Speech, and Language Processing,* 2006, vol. 14 (4), 1462-1469
- **S. MARKOVICH ; S. GANNOT ; I. COHEN.** Multichannel Eigenspace Beamforming in a Reverberant Noisy Environment With Multiple Interfering Speech Signals. *IEEE Transactions on Audio, Speech, and Language Processing,* 2009, vol. 17 (6), 1071-1083
- **S.NIKOLAOS et al.** Acoustic Beamforming in Front of a Reflective Plane. *26TH EUROPEAN SIGNAL PROCESSING CONFERENCE, EUSIPCO 2018,* 03 September 2018, 26-30
- **H. KUTTRUFF.** Room acoustics. CRC Press, 2009